# EUROPEAN PATENT APPLICATION

(11) **EP 3 375 994 A1**
(43) Date of publication of application: **19.09.2018**
(21) Application number: 17161573.5
(22) Date of filing: 17.03.2017
(51) Int. Cl.: F01N 3/027, F01N 3/20, F01N 13/00, F02D 19/00, F02N 19/00, F02N 19/04

(54) **METHOD FOR PRECONDITIONING A VEHICLE BEFORE ENGINE START AND A VEHICLE ADAPTED TO BE PRECONDITIONED BEFORE ENGINE START**

(71) Applicant: Volvo Car Corporation, 40 531 Göteborg (SE)
(72) Inventor: Almkvist, Göran, 44331 Lerum (SE)
(74) Representative: Kransell & Wennborg KB

(57) **Abstract**

A method for preconditioning a vehicle comprising a combustion engine before start by using electricity from an external grid, comprising the step of heating the catalytic converter with an electrical heater mounted inside catalytic converter, where the heater is powered by the external grid. The advantage of the invention is that cold start emissions can be reduced, and that the energy consumption and the exhaust emission of the vehicle can be minimized.

## Description

### TECHNICAL FIELD

The present invention relates to a method for preconditioning a vehicle comprising a combustion engine before start by using electricity from an external grid.

### BACKGROUND ART

Vehicles comprising an internal combustion engine are subjected to a plurality of different legislative requirements and regulations. Some of these requirements and regulations are directed to fuel consumption and exhaust emission. Different countries or markets may have different requirements, but most include a specific test cycle that is supposed to give an indication of the fuel consumption and exhaust emission of the vehicle. However, there is normally a discrepancy between the fuel consumption and exhaust emission measured in a test cycle and the same measured in real world driving conditions.

One difference between a test cycle and real world driving is that all ancillary loads must be turned off in a test cycle due to the test procedure, such as the air conditioning compressor, the ventilation fan, the lights, the heated rear window etc. Another difference is e.g. that acceleration of the vehicle is relatively slow in some test cycles.

One similarity between a test cycle and real world driving is that both normally start with a cold start, even though the cold start in a test cycle in one example is well defined to approximately 25 degrees Celsius. A real world cold start is normally performed in a large temperature interval, which may start at -40 degrees Celsius and may end at 40 degrees Celsius. During a cold start, the fuel consumption will be higher, mainly due to higher friction in the engine and in the transmission. The exhaust emission will also be higher, mainly due to that exhaust gas treatment equipment has not reached the optimal working temperature.

It is known to mount an engine coolant heater to a combustion engine. Such engine coolant heaters are available as an aftermarket accessory and is mounted to the engine, either in the cooling circuit as an immersion heater, or as a contact block heater at the outside of the engine cooling circuit. Such an engine coolant heater will heat the coolant in the inner flow circuit of the engine coolant. The heat will cause a self-circulation in the inner coolant circuit of the engine, which will help to heat most of the engine if the heater is active for a required time. Such an engine coolant heater is however an accessory which is mounted by the interested user and which is activated by the user, normally by the use of a timer. If the engine coolant heater is used, it will improve the cold start of the vehicle somewhat. Normally, a user only uses the engine coolant heater when the weather is cold, e.g. below zero degrees Celsius, and the main purpose is to be able to heat the cabin quicker when the vehicle is started. In this way, the user must not wait until the engine has heated the coolant and the thermostat has opened. The engine coolant heater is mounted upstream of the thermostat, such that the heat exchanger for the cabin climate is operable to transfer heat immediately when the vehicle is started.

There is thus room for a method that improves the cold start performance of a vehicle.

### DISCLOSURE OF INVENTION

An object of the invention is therefore to provide an improved catalytic converter that can be used for preconditioning a vehicle before start. A further object of the invention is to provide a vehicle that is adapted to be preconditioned before start. A further object of the invention is to provide a method for preconditioning a vehicle before start.

The solution to the problem according to the invention is described in the characterizing part of claim 1 regarding the catalytic converter, in claim 7 regarding the vehicle and in claim 9 regarding the method. The other claims contain advantageous further developments of the inventive catalytic converter, the vehicle and the method. The claims also contain a computer program and a computer program product for performing such a method.

In a catalytic converter for a vehicle, the object of the invention is achieved in that the catalytic converter comprises an electrical heater mounted inside the catalytic substrate. By mounting the electrical heater inside the catalytic converter substrate, a more efficient and more reliable heating of the catalytic converter is achieved. Further, the catalytic converter can be pre-heated such that it will be operable right from the start of the engine. By pre-heating the catalytic converter with a built-in electrical heater, the catalytic converter is heated in a gentle way which reduces stress on the components in the catalytic converter, and specifically on the catalytic converter substrate. The electrical heater is preferably mounted in a hole in the substrate, where the hole is perpendicular to the flow direction of the gas through the catalytic converter. The electrical heater is further preferably positioned at the inlet side of the catalytic converter, because the conversion of harmful exhaust gases starts at the inlet of the catalytic converter, where the temperature is the highest. The inlet side of the catalytic converter is closest to the exhaust manifold of the engine.

For a catalytic converter comprising a metallic foil monolith, a single hole with a single electrical heater may suffice to heat the catalytic converter. For a catalytic converter comprising a ceramic monolith, more than one electrical heater may be used due to the lower thermal conductivity of the ceramic material. In this case, two or more spaced apart holes, each with an electrical heater, may be used. This will also depend on the available time to heat the catalytic converter.

In a method for preconditioning a vehicle comprising a combustion engine before start by using electricity from an external grid, the step of heating a catalytic converter with an electrical heater powered by the external grid, where the electrical heater is mounted inside the catalytic converter substrate, is comprised.

By this first embodiment of the method, the method will be able to precondition a vehicle before start of the vehicle, such that the cold start performance of the vehicle is improved. In this way, the exhaust emissions of the vehicle can be reduced also during the initial part of a journey. This is achieved in that the catalytic converter is already warm when the vehicle is started, which means that the catalytic converter can start to reduce emissions immediately when the engine is started.

The catalytic converter is heated with an electrical heater powered by the external grid. The electrical heater is mounted inside the catalytic converter, preferably at the inlet section of the catalytic converter, which is closest to the engine. By preheating the catalytic converter to its operation temperature, the catalytic converter is functional right at the start moment of the engine, which means that the exhaust emission can be minimized. At the same time, it is not required to use excessive fuel to bring the catalytic converter to its working temperature, which further reduces the fuel consumption of the vehicle. Since the catalytic converter heater is of a low power type, typical with a rating of 50 - 150 watts, it is preferably activated at a predefined time interval before the estimated start of the vehicle. In this way, the energy usage is optimized.

The method may further comprise the step of heating the engine with an electrical heater powered by the external grid. The heater will heat the engine coolant and the engine, such that the engine will be warm and the oil in the oil circuit will flow easily, thereby reducing the friction in the engine caused by high viscous oil and mechanical clearance gap friction. The engine coolant heater is either an immersion heater mounted in the engine cooling circuit or a contact block heater mounted at the outside of the engine cooling circuit. Since the engine coolant heater is of a high power type, typical with a rating of 500 watts or more, it is preferably activated at a predefined time interval before the estimated start of the vehicle. In this way, the energy usage is optimized.

The transmission oil and the transmission case may also be heated with an electrical heater powered by the external grid. In this way, the temperature of the transmission oil will allow the transmission oil to flow easily. Further, by heating the transmission case, the gap clearance of the bearings will be reduced which will reduce the need to use preload bearings. The initial friction in the transmission will thus be reduced by heating the transmission. The electrical heater may be mounted either in the transmission as an immersion heater or may be mounted as a contact block heater at the outside of the transmission. By reducing the friction in the transmission at cold start, the fuel consumption is reduced. Since the transmission heater is of a high power type, typical with a rating of 300 watts or more, it is preferably activated at a predefined time interval before the estimated start of the vehicle. In this way, the energy usage is optimized.

The method may further comprise the step of heating the fuel in a fuel rail with an electrical heater powered by the external grid. The heater will heat the fuel that is ready to be injected into the engine, such that the fuel will be warm and such that the combustion of the fuel is improved. The fuel heater is either an immersion heater mounted in the fuel rail or a contact block heater mounted at the outside of the fuel rail. The fuel heater is of a low power type, typical with a rating of 50 - 150 watts.

The on-board battery may also be charged with an on-board charger powered by the external grid. By charging the on-board battery of the vehicle with an on-board charger, the charging of the battery can be optimized. One advantage is that an on-board charger can charge the battery in a more reliable way than a voltage regulator of the generator. Another advantage is that if the battery is fully charged when the vehicle starts, there is no need to charge the battery with the generator during driving, which further reduces the fuel consumption. Preferably, the on-board charger is always active when the vehicle is connected to the external grid. By using an intelligent on-board charger, the charging current will be reduced when the battery is fully charged, such that excessive charging is avoided.

The method may further comprise the step of heating a particulate filter with an electrical heater powered by the external grid. By preheating the particulate filter to its regeneration temperature, the particulate filter will be able to regenerate during still-stand. Since the gas flow through the particulate filter is small at still-stand, it is of advantage to heat the particulate filter with a relatively low power over a longer time, such that all soot can be removed. With a fresh particulate filter at the start moment of the vehicle, the time to the next regeneration moment of the particulate filter will be as long as possible, which further reduces the fuel consumption of the vehicle. Since the particulate filter heater is of a low power type, typical with a rating of 50 watts or less, it may be active when the vehicle is connected to the external grid. This will secure that the particulate filter is heated to its regenerating temperature and that it will be able to regenerate over a longer time, such that it is completely regenerated when the vehicle is started. It would also be possible to use a heater with a higher power rating, and to control the heater to heat for a predefined time before the vehicle is started.

In a development of the method, the engine coolant heater, the transmission oil heater and the catalyst converter heater are preferably active for a predefined time interval before the estimated start of the vehicle, and are preferably controlled simultaneously such that only one control switch is required. This predefined time interval may be set by a user or may be predetermined by the vehicle manufacturer in order to optimize the performance. The predefined time interval is preferably dependent on the ambient temperature.

The vehicle is a vehicle comprising a combustion engine. The vehicle may be powered solely by the combustion engine, or may be a hybrid vehicle. By connecting the vehicle to an external power grid before start, and activating the heaters for a predefined time before start of the vehicle, the energy usage of the vehicle can be reduced and the vehicle can be preconditioned to a favourable starting condition, where important systems of the vehicle are at or close to the optimal working conditions. With an intelligent control of the preconditioning, energy usage can be optimized.

In a vehicle, comprising an internal combustion engine, the object of the invention is achieved in that the vehicle comprises a connection means for connecting the vehicle to an external electrical grid and an electrical heater adapted to heat a catalytic converter, where the electrical heater is mounted inside the catalytic converter substrate.

By this first embodiment of a vehicle according to the invention, a vehicle adapted to be preconditioned before start is provided. The vehicle comprises a heater adapted to heat the catalytic converter. The heater is powered by an external power grid, which means that the energy that has to be supplied by the vehicle after start can be minimized, and that the exhaust emission and the fuel consumption can likewise be minimized.

### BRIEF DESCRIPTION OF DRAWINGS

The invention will be described in greater detail in the following, with reference to the attached drawings, in which
- Fig. 1: shows part of a vehicle according to the invention adapted to be preconditioned before start,
- Fig. 2: shows a cross section of a catalytic converter comprising an electrical heater according to the invention,
- Fig. 3: shows a schematic flow chart of an inventive method for preconditioning a vehicle before start.

### MODES FOR CARRYING OUT THE INVENTION

The embodiments of the invention with further developments described in the following are to be regarded only as examples and are in no way to limit the scope of the protection provided by the patent claims.

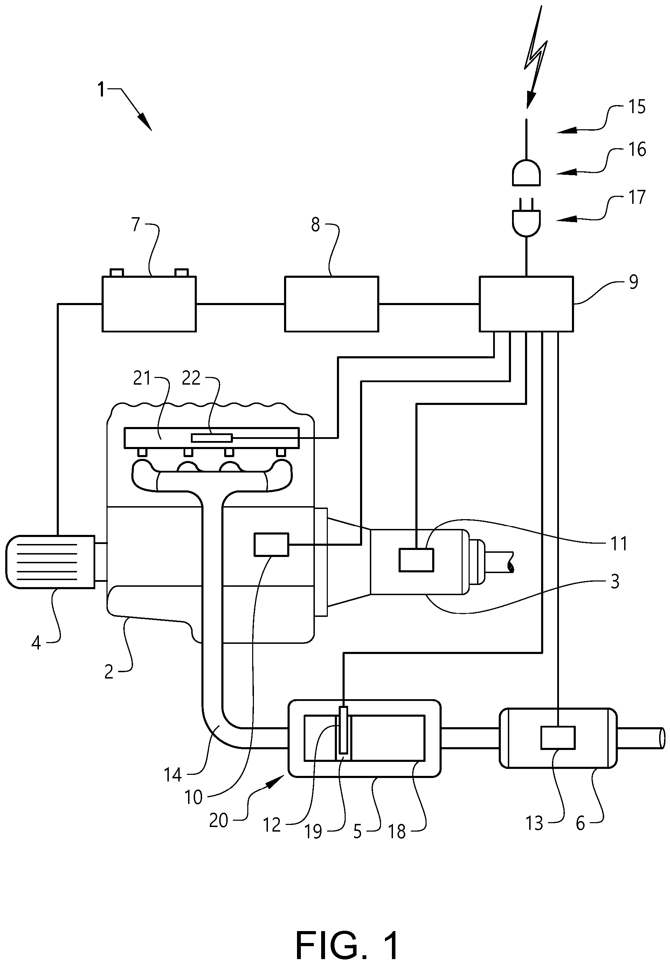

Figure 1 shows part of a schematic vehicle which is powered solely by a combustion engine. The vehicle 1 comprises a combustion engine 2, which may be a diesel engine, a gasoline engine or an engine using liquefied natural gas or compressed natural gas. The combustion engine comprises a fuel rail 21 comprising a fuel heater 22. An exhaust pipe 14 is connected to the exhaust outlet of the engine. A catalytic converter 5 and a particulate filter 6 are mounted at the exhaust pipe 14. The vehicle further comprises a transmission 3, which may be a manual gearbox, an automatic gearbox or an automated shifting manual gearbox. An electric machine 4 acting as an alternator is rotationally connected to the engine. An on board batter 7 is further provided in the vehicle, which may be charged from the alternator when the engine is running. The nominal voltage of the battery is 12 or 24 volts and the battery is used for support functions in the vehicle. The vehicle may be any type of vehicle, such as a passenger car, a light truck, a truck or a bus. In the shown example, a passenger car is used as an example.

The combustion engine 2 is provided with an electrical heater 10, which is adapted to heat the engine coolant fluid in the engine. The engine coolant heater 10 may either be an immersion heater mounted in the engine cooling circuit or may be a contact block heater mounted at the outside of the engine cooling circuit. The electrical heater 10 is powered from an external electric grid 15, preferably having a nominal alternating voltage of 220 volts or 110 volts. The vehicle is connected to the external grid 15 by a connector comprising a socket 16 and a plug 17, which can be connected and disconnected by the user. The connector is preferably a standard plug and socket having an earth connection which is used to connect a known engine coolant heater. It would also be possible to use a socket that automatically connects the external electric grid to the plug of the vehicle when the vehicle is parked in a specific position. The heater is connected to a control unit 9 positioned in the vehicle.

The control unit is adapted to distribute the electricity from the external grid to the heaters and the charger of the vehicle. The control unit may comprise a common switch for all heaters, such that all heaters are activated and deactivated at the same time. The control unit may also comprise a switch for each heater, such that the electric supply to each heater can be controlled individually by the control unit. The control unit may further comprise a timer circuit and a transceiver adapted to communicate with a remote control of some kind. By using the remote control, the preconditioning of the vehicle can be set from an external device such as a smart phone or a dedicated remote control. The communication with the control unit may use any type of wireless communication. It is also possible to superpose a control signal on the electric mains cable from the electric grid.

The engine coolant heater 10 is mounted in the inner cooling circuit of the engine. In this way, the heated engine coolant will be able to self-circulate somewhat which will heat the engine, such that the engine will be warm and the oil in the oil circuit will flow easily, thereby reducing the friction in the engine caused by high viscous oil. The engine coolant heater is of a high power type, typical with a rating of 500 watts or more. With such power, a heating time interval of one to two hours will suffice to heat the engine to a warm starting condition, which may be in the interval of 40-60 degrees Celsius. This time is of course dependent on the ambient temperature of the vehicle. Preferably, an estimated time for the start of the vehicle is set in the control unit, and the control unit activates the engine coolant heater at a specific time interval before the estimated start, taking account the ambient temperature. In this way, the energy usage is optimized.

The transmission 3 of the vehicle 1 comprises an electrical heater 11 adapted to heat the transmission. The heater is powered by the external grid through the control unit. The control unit can activate and deactivate the electrical heater depending on the heating requirements of the transmission. The electrical heater 11 may be mounted either in the transmission as an immersion heater positioned in the transmission oil or may be mounted as a contact block heater at the outside of the transmission. In this way, the transmission oil and the transmission case will be heated to a suitable temperature, such as 40-60 degrees Celsius, which will reduce the initial friction in the transmission when the vehicle is started. The reduced initial friction will in turn reduce the fuel consumption of the vehicle. The transmission heater is of a high power type, typical with a rating of 300 watts or more, and is preferably activated by the control unit at a predefined time interval before the estimated start of the vehicle. In this way, the energy usage is optimized.

The catalytic converter 5 of the vehicle is heated with an electrical heater 12 powered by the external grid. The electrical heater is mounted inside the catalytic converter substrate 18, preferably at the inlet side of the catalytic converter which is positioned closest to the engine in order to optimize the performance of the catalytic converter. By preheating the catalytic converter to its operation temperature, the catalytic converter is functional right at the start moment of the engine, which means that the exhaust emission can be minimized. At the same time, it is not required to use excessive fuel to bring the catalytic converter to its working temperature, which further reduces the fuel consumption of the vehicle. The catalytic converter heater is of a moderate power type, typical with a rating of 150 watts or more, and is preferably activated by the control unit at a predefined time interval before the estimated start of the vehicle. In this way, the energy usage is optimized.

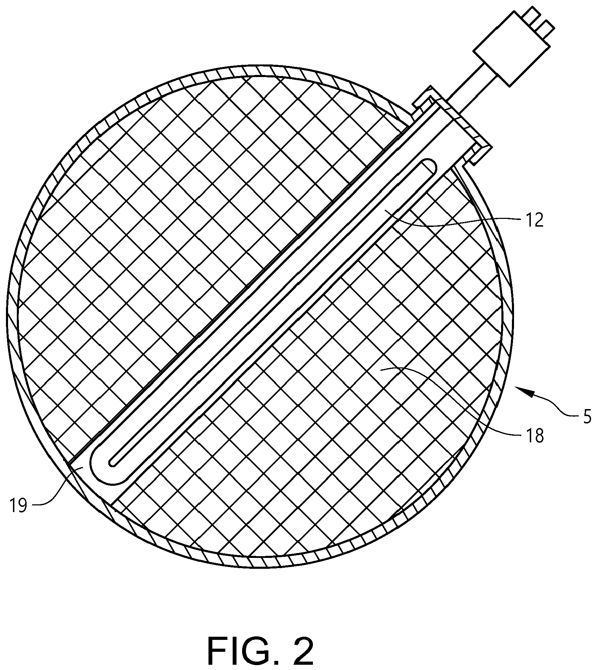

The heater 12 in the catalytic converter 5 is mounted inside the catalytic converter substrate 18. Fig. 2 shows a cross section of a catalytic converter. The heater 12 is preferably mounted in a hole 19 in the catalytic converter substrate. The hole is preferably perpendicular to the flow direction of gases through the catalytic converter in order to disturb the flow through the catalytic converter as little as possible, but other angles are also possible. In this way, the hole and the electrical heater will not affect the function of the catalytic converter. For automotive catalytic converters, the catalytic substrate may be either a metallic foil monolith or a ceramic monolith having a honeycomb structure in order to provide a large surface area. The catalytic converter is further provided with a wash coat which is a carrier for the catalytic materials of the catalytic converter. The catalyst itself is most often a mix of precious metals. For a catalytic converter comprising a metallic foil monolith, a single hole with a single electrical heater may suffice. For a catalytic converter comprising a ceramic monolith, more than one electrical heater may be used due to the lower thermal conductivity of the ceramic material. In this case, two or more spaced apart holes, each with an electrical heater, may be used.

The normal way of heating a catalytic heater is to mount an electric heater in front of the catalytic converter, which will heat the gas entering the catalytic converter. This will allow the catalytic converter to be heated by the gas flow. Such a solution can however only be used when the engine is running, and the heater will be powered by the battery of the vehicle. With this solution, the catalytic converter will not be functional when the engine is started. It is also possible to heat the catalytic converter by raising the temperature of the combustion gases by controlling the combustion of fuel.

The catalytic converter used here is provided with a heater element, resembling an immersion heater, which is mounted in a hole in the core of the catalytic converter. Since the heater element is of a moderate power type and the heater will be active for a relatively long time, such as one or more hours, the catalytic converter can be heated to its operating temperature in a gentle and reliable way, which will reduces stress on the components in the catalytic converter, and specifically on the catalytic converter substrate. The complete core of the catalytic converter will be evenly heated, which will improve the operation of the catalytic converter right from the start. A further advantage is that the catalytic converter can be heated without the need of a high power gas through flow heater.

The fuel rail 21 is heated by a fuel heater 22 which may be arranged in the fuel rail 21 or that may be mounted on the outside of the fuel rail. The fuel heater will be of a low power type, typically in the range of 50-120 Watts.

The on board battery 7 is charged by an on-board charger 8 which is powered by the external grid 15. By charging the on board battery of the vehicle with an on-board charger, the charging of the battery can be optimized and the battery will be fully charged when the vehicle is started. One advantage of using an on-board charger is that a separate charger can charge the battery in a more reliable and consistent way, compared with the voltage regulator of the alternator. When the battery is fully charged when the vehicle is started, there is no need to charge the battery with the alternator, which will further reduce the fuel consumption of the vehicle. Preferably, the on-board charger is always active when the vehicle is connected to the external grid. By using an intelligent on-board charger, the charging current will be reduced when the battery is fully charged. It is also possible to control the on-board charger by the control unit. It is e.g. possible to deactivate the on-board charger when the battery is fully charged.

In the shown example, the vehicle comprises a particulate filter 6 which comprises a heater 13 adapted to heat the particulate filter by the use of the external grid 15. The particulate filter is preheated to its soot regeneration temperature such that it can regenerate during still stand by burning soot when it is connected to the external grid. This means that the CO₂ penalty due to soot emission can be minimized. A particulate filter that has a selective reduction catalyst function is preheated to its operation temperature such that the selective reduction catalyst will be able to function right at the start moment of the vehicle, thereby reducing NOₓ emissions. At the same time, it is not required to use excessive fuel to bring the particulate filter to its working temperature, which further reduces the fuel consumption of the vehicle. The particulate filter heater is preferably of a low power type, typical with a rating of 50 watts or less, and is preferably always active when the vehicle is connected to the external grid. This will secure that the particulate filter is heated to its working temperature. It is also possible to control the activation and deactivation of the heater by the control unit, e.g. in order to deactivate the heater when the regeneration is completed.

The particulate filter is adapted to the fuel used by the vehicle. In a vehicle comprising a diesel engine, a diesel particulate regeneration filter is used to reduce the amount of soot in the exhaust gas. In a vehicle comprising a gasoline engine, a particulate filter may also be used to reduce the amount of particles in the exhaust gas, if required by legislative regulations.

It is also possible to precondition the cabin of the vehicle depending on the ambient temperature. In warm weather, it is e.g. possible to use the cabin fan to ventilate the cabin by blowing ambient air through the cabin. In this way, heat build-up in the cabin can be avoided. In cold weather, the cabin fan can blow heated air from the climate system heat exchanger into the cabin in order to rise the temperature in the cabin and to help to defrost the windows. The engine coolant heater heats the engine coolant, which self-circulates in the inner cooling circuit. The cabin fan can transfer some of this heat to the cabin through the climate system heat exchanger. It is also possible to heat the vehicle cabin, and to help to defrost the windows, by the use of present heater elements, such as a seat heater or an electric defroster. Since these heater elements run on low voltage, it is important that the used energy for the heater elements does not exceed the capacity of the on-board charger. Preferably, these heater elements are only used when the battery is fully charges and the on-board charger can be used as an AC/DC converter to power the heater elements. Preferably, the control unit controls the activation of these heater elements and determines the balance between the use of the heater elements and the charging of the battery.

The vehicle is provided with a control unit 9 which is adapted to control the various heaters and the battery charger connected to the control unit. The control unit will distribute power from the external electric grid to the heaters in dependency of e.g. the estimated start time for the vehicle and the ambient temperature. The control unit may also comprise a battery management function that controls the charging of the on board battery by the on-board charger. The control unit may also control the preconditioning of the cabin by e.g. using the cabin fan, electric seat heaters and/or electric defrosters. The control unit may also comprise temperature measuring means that can measure the temperature in one or more of the heated objects, such that each electric heater can be controlled individually to a specific temperature. It is e.g. possible to measure the temperature of the engine coolant and deactivate the engine coolant heater when the coolant temperature is 60 degrees Celsius.

The control unit can be set or programmed in different ways. One possibility is to set the control unit from the user interface in the vehicle, i.e. in one set up menu. Here, the estimated time to start may be set, or the preconditioning of the vehicle can be activated instantly. It is also possible to select the extent of the preconditioning, e.g. if the cabin is also to be preconditioned. The control unit may also be set by a remote control. A remote control may be integrated in the vehicle key unit or the remote control may be an application in a mobile phone. It would also be possible to set the control unit from a remote position, e.g. by using a remote control system such as Volvo On Call, where an operator in a central station may set the estimated time to start.

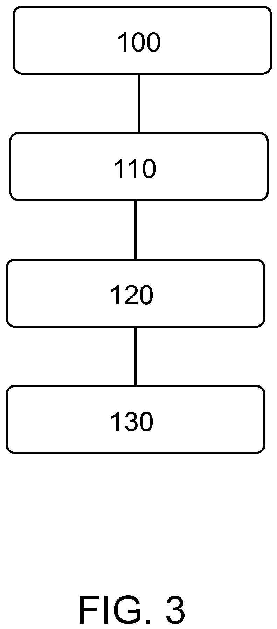

Fig. 3 shows a schematic flow chart of the method for preconditioning a vehicle comprising a combustion engine before start by using electricity from an external grid system. The method is performed before the vehicle is started. When the vehicle is parked, e.g. at an evening or night, the external grid is connected to the vehicle by inserting a socket into a plug positioned at the vehicle. The control unit will now be connected to the external grid and may distribute electrical power to selected heaters in the vehicle. The control unit may be powered by the external grid or may be powered by the on board battery of the vehicle, or may be powered by the on board battery when no external grid is connected.

The method steps are preferably performed by a computer program and a computer program product contained and run in the electronic control unit of the vehicle.

In step 100, the vehicle is connected to an external electrical grid, e.g. by the use of a standard socket and plug normally used to connect an engine coolant heater, which can be connected and disconnected by the user. It would also be possible to use a socket that automatically connects the main grid to the vehicle when the vehicle is parked in a specific position. Alternatively, the grid connection is a wireless, inductive connection.

In step 110, the catalytic converter is heated with an electrical heater positioned inside the catalytic converter. The heater for the catalytic converter is powered by the external grid. The catalytic converter heater is preferably activated a predefined time interval before the estimated start of the vehicle. It is also possible to activate the heater continuously, preferably with a lower power input. It is of advantage to know the estimated start time of the engine. In this case, the heating of the catalytic converter can be optimized for the estimated start time in order to save energy. The power supply to the heater is controlled by a control unit of the vehicle. The heating of the catalytic converter may be controlled by time or may be controlled to heat the catalytic converter to a specific temperature. In one example, the heater is activated one or two hours before the estimated start of the vehicle. The time interval may be dependent on the ambient temperature.

In step 120, the external grid is disconnected from the vehicle, in this example by removing the socket. If the estimated time to start the vehicle is reached, the control unit has deactivated the heaters. If the estimated time to start is not reached, the heaters will be deactivated by pulling the socket.

In step 130, the vehicle is started in a preconditioned state.

In method step 110, the engine coolant fluid may also be heated with an electrical heater powered by the external grid. The engine coolant fluid heater is preferably activated a predefined time interval before the estimated start of the vehicle. The power supply to the heater is controlled by a control unit of the vehicle. The heating of the engine coolant fluid may be controlled by time or may be controlled to heat the coolant to a specific temperature, e.g. to 300 - 400 degrees Celsius. In one example, the heater is activated one or two hours before the estimated start of the vehicle. The time interval may be dependent on the ambient temperature. Further in step 110, the transmission may be heated with an electrical heater powered by the external grid. The transmission heater is preferably activated a predefined time interval before the estimated start of the vehicle. The power supply to the heater is controlled by a control unit of the vehicle. The heating of the transmission may be controlled by time or may be controlled to heat the oil to a specific temperature. In one example, the heater is activated one or two hours before the estimated start of the vehicle. The time interval may be dependent on the ambient temperature.

Further in step 110, the catalytic converter may be heated with an electrical heater powered by the external grid. The catalytic converter heater is preferably activated a predefined time interval before the estimated start of the vehicle. The power supply to the heater is controlled by a control unit of the vehicle. The heating of the catalytic converter may be controlled by time or may be controlled to heat the catalytic converter to a specific temperature. In one example, the heater is activated one or two hours before the estimated start of the vehicle. The time interval may be dependent on the ambient temperature.

Further in step 110, the fuel rail may be heated with an electrical heater powered by the external grid. The fuel rail heater is preferably activated a predefined time interval before the estimated start of the vehicle. The power supply to the heater is controlled by a control unit of the vehicle. The heating of the fuel rail may be controlled by time or may be controlled to heat the fuel rail to a specific temperature, e.g. to 100 degrees Celsius. In one example, the heater is activated one or two hours before the estimated start of the vehicle. The time interval may be dependent on the ambient temperature.

Further in step 110, the on board battery may be charged with an on-board charger powered by the external grid. The on board battery charger is preferably activated when the vehicle is connected to the external grid, such that the battery can be fully charged with a relatively low charging current. In one example, a charging current of four amperes is used. The power supply to the charger is controlled by a control unit of the vehicle, which may disconnect the charger when the battery is fully charged.

Additionally in step 110, a particulate filter may be heated with an electrical heater powered by the external grid, if a particulate filter is mounted on the vehicle. On some markets, particulate filters are only used on diesel vehicles. The particulate filter is preferably activated when the vehicle is connected to the external grid, such that the particulate filter is constantly heated when the vehicle is connected to the external grid. The heating of the particulate filter may also be controlled by time or may be controlled to heat the particulate filter to a specific temperature.

The invention is not to be regarded as being limited to the embodiments described above, a number of additional variants and modifications being possible within the scope of the subsequent patent claims.

### REFERENCE SIGNS

- 1:: Vehicle
- 2:: Combustion engine
- 3:: Transmission
- 4:: Electric machine
- 5:: Catalytic converter
- 6:: Particulate filter
- 7:: Battery
- 8:: On-board charger
- 9:: Control unit
- 10:: Engine coolant heater
- 11:: Transmission oil heater
- 12:: Catalytic converter heater
- 13:: Particulate filter heater
- 14:: Exhaust pipe
- 15:: External grid
- 16:: Socket
- 17:: Plug
- 18:: Catalytic converter substrate
- 19:: Hole
- 20:: Inlet side
- 21:: Fuel rail
- 22:: Fuel rail heater

## Claims

1. Catalytic converter for a vehicle, wherein the catalytic converter (5) comprises an electrical heater (12) mounted inside the catalytic converter substrate (18).

2. Catalytic converter according to claim 1, wherein the electrical heater (12) is mounted in a hole (19) in the catalytic converter substrate (18), where the hole (19) is perpendicular to the flow direction of gases through the catalytic converter.

3. Catalytic converter according to claim 1 or 2, wherein the electrical heater (12) is positioned adjacent the inlet side (20) of the catalytic converter (5).

4. Catalytic converter according to any of claims 1 to 3, wherein the catalytic converter (5) comprises a metallic foil monolith.

5. Catalytic converter according to any of claims 1 to 3, wherein the catalytic converter (5) comprises a ceramic monolith.

6. Catalytic converter according to claim 5, wherein the catalytic converter (5) comprises a plurality of electrical heaters (12), where each electrical heater (12) is mounted in a separate hole (19) and where the holes (19) are spaced apart.

7. Vehicle comprising an internal combustion engine (2), wherein the vehicle (1) comprises a connection means (16, 17) for connecting the vehicle (1) to an external electrical grid (15), and a catalytic converter according to any of claims 1 to 6.

8. Vehicle according to claim 7, wherein the vehicle further comprises an electrical heater (10) adapted to heat an engine (2) coolant fluid, and/or an electrical heater (11) adapted to heat a transmission (3), and/or an electrical heater (13) adapted to heat a particulate filter (6), and/or an electrical heater (22) adapted to heat the fuel in a fuel rail (21), and/or an on-board charger (8) adapted to charge an on board battery (7), where the electrical heater (10) adapted to heat the engine coolant fluid, the electrical heater (11) adapted to heat the transmission, the electrical heater (13) adapted to heat the particulate filter, the electrical heater (22) adapted to heat the fuel in the fuel rail, and the on-board charger (8) adapted to charge the on board battery (7) are all powered by the external electrical grid (15).

9. A method for preconditioning a vehicle comprising a combustion engine before start by using electricity from an external grid, comprising the following steps:
- connecting the vehicle to the external grid,
- heating a catalytic converter with an electrical heater powered by the external grid, where the electrical heater is mounted inside the catalytic converter substrate.

10. Method according to claim 9, wherein the electrical heater of the catalytic converter is positioned in a hole in the catalytic converter substrate, where the hole is perpendicular to the gas flow through the catalytic converter.

11. Method according to claim 9 or 10, wherein the electrical heater of the catalytic converter is positioned adjacent the inlet side of the substrate.

12. Method according to any of claims 9 to 11, wherein the heater is activated at a predefined time interval before the estimated start of the engine.

13. Method according to any of claims 9 to 12, wherein the method comprises one or more of the additional steps of:
- heating the engine coolant fluid with an electrical heater powered by the external grid,
- heating the transmission with an electrical heater powered by the external grid,
- heating a particulate filter with an electrical heater powered by the external grid,
- heating the fuel in a fuel rail by a fuel heater powered by the external grid,
- charging the on board battery with an on-board charger powered by the external grid.

14. A computer program comprising program code means for performing all the steps of anyone of the claims 9 - 13 when said program is run on a computer.

15. A computer program product comprising program code means stored on a computer readable medium for performing all the steps of any one of the claims 9 - 13 when said program product is run on a computer.
